# FASCICULE DE BREVET EUROPEEN

(11) **EP 1 154 906 B1**
(45) Date de publication et mention de la délivrance du brevet: **21.05.2008**
(21) Numéro de dépôt: 00910676.6
(22) Date de dépôt: 14.02.2000
(51) Int. Cl.: B60C 9/18, B60C 9/00, B29D 30/38

(54) **NAPPE DE RENFORCEMENT POUR PNEUMATIQUE, SON PROCEDE DE FABRICATION ET PROCEDE DE FABRICATION DU PNEUMATIQUE**
VERSTÄRKUNGSSCHICHT FÜR REIFEN,VERFAHREN ZUR HERSTELLUNG DERSELBEN, UND VERFAHREN ZUR HERSTELLUNG DES REIFENS
REINFORCING PLY FOR TYRE, METHOD FOR MAKING SAME AND METHOD FOR MAKING A TYRE

(30) Priorité: 19.02.1999 FR 9902145
(43) Date de publication de la demande: 21.11.2001
(73) Titulaire: Société de Technologie Michelin, 63000 Clermont-Ferrand Cedex 09 (FR); Michelin Recherche et Technique S.A., 1763 Granges-Paccot (CH)
(72) Inventeur: BILLIERES, Jean, F-63100 Clermont-Ferrand (FR)
(74) Mandataire: Diernaz, Christian
(86) Numéro de dépôt international: PCT/EP2000/001189
(87) Numéro de publication internationale: WO 2000/048850

(56) Documents cités:
- EP-A- 0 454 932
- EP-A- 0 619 170
- FR-A- 1 331 934
- FR-A- 1 419 480
- FR-A- 2 075 851
- FR-A- 2 351 810
- US-A- 3 392 774
- PATENT ABSTRACTS OF JAPAN vol. 1995, no. 10, 30 novembre 1995 (1995-11-30) & JP 07 186614 A (BRIDGESTONE CORP), 25 juillet 1995 (1995-07-25)

## Description

La présente invention concerne une nappe de renforcement pour pneumatique, ainsi que le pneumatique utilisant comme renfort une telle nappe. Elle concerne aussi le procédé de fabrication d'une telle nappe, ainsi que le procédé de fabrication du pneumatique qui utilise ladite nappe.

Une nappe de renforcement pour pneumatique est formée d'éléments de renforcement généralement recouverts de part et d'autre de couches de mélange caoutchouteux dites couches de calandrage, de manière à ce que les dits éléments ne puissent être en contact avec l'extérieur. Le mélange caoutchouteux utilisé est généralement unique, de même composition et de mêmes propriétés.

Il est parfois hautement souhaitable que le mélange de calandrage soit différent pour une même nappe selon la localisation de ladite nappe dans le pneumatique qui l'utilise, que ce soit une nappe d'armature de carcasse, une nappe d'armature de sommet, ou toute autre nappe de renforcement. Selon l'enseignement du brevet FR 2 351 810, une armature de sommet à plusieurs nappes d'éléments de renforcement, parallèles entre eux dans chaque nappe et croisés d'une nappe à la suivante, doit être dotée, afin d'augmenter la durée de vie du pneumatique, de caractéristiques différentes dans sa zone centrale et ses zones marginales. Le pneumatique de ladite référence, comprenant une armature de carcasse et une armature de sommet de plusieurs nappes, est caractérisé en ce que le mélange caoutchouteux de calandrage des nappes de sommet a un module d'élasticité en tension à 100% d'allongement supérieur à 70 kg/cm² dans la zone médiane de l'armature de sommet, zone définie par le rapport de la largeur de ladite zone sur la largeur globale de ladite armature, et en ce que le mélange caoutchouteux de calandrage des mêmes nappes a un module d'élasticité en tension à 100% d'allongement inférieur à 40kg/cm² dans les deux zones marginales restantes de l'armature de sommet.

L'enseignement du brevet FR 1 331 934 concerne un pneumatique à armature de carcasse radiale, et l'invention décrite consiste à rigidifier la partie basse des flancs, en leur conférant une rigidité plus atténuée que ne le permet la solution couramment employée, c'est-à-dire la superposition latéralement de câbles croisés sur l'armature de carcasse radiale. A cet effet, la rigidification des flancs, dans la zone comprise entre le bourrelet et sensiblement la mi-flanc, est obtenue au moyen d'au moins une nappe d'éléments de renforcement méridiens enrobés dans le mélange de calandrage de l'armature de carcasse. Dans un des modes de réalisation décrit, l'armature de carcasse est constituée d'une seule nappe de fils ou câbles métalliques radiaux, retournée autour de la tringle et s'arrêtant dans le bourrelet, ces fils ou câbles étant revêtus dans la zone comprise entre le bourrelet et sensiblement la mi-flanc de couches de calandrage dont le module d'élasticité est d'au moins 350 g/mm², module qui est un module élevé par rapport au module du mélange de calandrage restant.

Le document FR 2 075 851, correspondant aux préambules des revendications 1 et 22, rappelle que, dans certains pneumatiques à armature de carcasse radiale, le choix du caoutchouc de liaison entre les éléments de renforcement est un facteur essentiel de l'apparition ou non de certains défauts après roulage du pneumatique. Ainsi, le choix d'une gomme de liaison à faible module d'élasticité favorise la séparation des câbles d'armature de carcasse à l'extrémité du retournement de ladite armature, dans les bourrelets et dans les régions du flanc voisines des bourrelets, plus spécialement pour la nappe de carcasse qui a un retournement haut dans les flancs. Par ailleurs, le choix d'une gomme de liaison à module d'élasticité élevé favorise la déchirure de la gomme de liaison entre câbles d'armature de carcasse, le long des lignes radiales dans la zone haute des flancs. Pour obtenir les meilleurs résultats, le brevet FR 2 075 851 préconise, plus particulièrement pour les pneumatiques à armature de carcasse radiale, d'entourer les câbles en matière relativement élastique, d'une couche de caoutchouc d'enrobage à module d'élasticité relativement élevé, les dits câbles étant séparés par un mélange caoutchouteux interstitiel qui est à module d'élasticité relativement bas en zone haute des flancs et relativement élevé en zone basse des flancs, couche d'enrobage et couche interstitielle ayant mêmes modules en zone basse. Quant au procédé pour obtenir qu'en zone haute des flancs la gomme d'enrobage des câbles et la gomme interstitielle entre câbles d'une même nappe soient de qualités différentes, alors qu'elles sont identiques en zone basse, il consiste, lors de la fabrication du pneumatique, à disposer radialement à l'intérieur d'une nappe, de câbles calandrés dans une couche de gomme de première qualité, une couche de gomme d'une seconde qualité, et lors de la vulcanisation du pneumatique à exercer une tension sur les câbles d'armature de carcasse.

Que ce soit l'une ou l'autre des solutions antérieures, que ce soit pour armature de carcasse ou pour armature de sommet, les procédés employés pour obtenir une nappe de renforcement telle que décrite ne permettent pas, étant donné les dispersions multiples affectant la qualité du produit semi-fini qu'est la nappe à l'état non vulcanisée, d'obtenir la structure optimale de ladite nappe suivant qu'elle est employée en armature de carcasse ou en armature de sommet, et encore moins son utilisation efficace lors de la fabrication d'un pneumatique.

L'invention a pour but de remédier à ces inconvénients. Elle propose un pneumatique ayant au moins une nappe de renforcement constituée d'éléments de renforcement noyés dans du caoutchouc vulcanisé, caractérisé en ce que les éléments de renforcement de ladite nappe sont enrobés individuellement dans un mélange caoutchouteux, dit mélange d'enrobage, ayant une composition et des propriétés physiques données, les dits éléments de renforcement disposés parallèlement entre eux étant recouverts sur une face d'une première couche caoutchouteuse, dite première couche de calandrage, de composition et propriétés constantes, alors que les dits éléments sont recouverts sur la face opposée d'une deuxième couche caoutchouteuse de calandrage, de composition et propriétés variables en fonction de la position méridienne sur la nappe de renforcement dans le pneumatique.

Les composition et propriétés de la première couche de calandrage peuvent être identiques aux composition et propriétés du mélange d'enrobage des éléments de renforcement. De manière avantageuse, les dites composition et propriétés de la première couche seront différentes de celles du dit mélange d'enrobage.

La nappe de renforcement peut être une nappe d'armature de carcasse, par exemple radiale, dont les éléments de renforcement peuvent être métalliques et/ou textiles : la position méridienne se juge alors sur la longueur méridienne de la nappe. La nappe de renforcement peut être une nappe d'armature de sommet, par exemple formée d'éléments de renforcement parallèles entre eux dans ladite nappe et faisant avec la direction circonférentielle du pneumatique un angle aigu, ou formée d'éléments circonférentiels, la position méridienne se jugeant sur la largeur axiale de ladite nappe. Elle peut être aussi toute autre nappe de renforcement utilisée couramment ou très souvent en pneumatique, telles que les nappes de renforcement de bourrelet, les nappes de renforcement de flancs, la position méridienne pouvant alors être assimilée à une hauteur radiale.

Le procédé pour fabriquer la nappe de renforcement non vulcanisée nécessaire à l'obtention de la nappe conforme à l'invention, en tant que produit semi-fini, consiste à fabriquer dans un premier temps un produit intermédiaire dit "nappe calandrée une face", obtenue par enrobage individuel de plusieurs éléments de renforcement par un mélange caoutchouteux au moyen d'une extrudeuse à plusieurs filières, suivi de l'arrangement à l'aide d'un moyen adapté des dits éléments enrobés suivant des lignes parallèles en respectant entre deux éléments adjacents un espacement défini, une des faces de l'ensemble d'éléments enrobés obtenus étant munie d'une première couche de calandrage non vulcanisée dite aussi couche de support, par mise de ladite couche de calandrage en contact avec ledit ensemble.

La mise en contact de la dite couche de calandrage avec l'ensemble des éléments de renforcement enrobés peut se faire soit par simple pose de l'ensemble sur la couche de calandrage, soit par simple pose de la couche de calandrage sur l'ensemble d'éléments de renforcement, mais préférentiellement dans les deux cas avec application d'une légère pression sur l'un ou les deux composants que sont l'ensemble d'éléments et la couche de calandrage.

La "nappe calandrée une face" non vulcanisée peut être utilisée avec des éléments de renforcement enrobés individuellement dans un mélange caoutchouteux soit non vulcanisé, soit prévulcanisé. Le procédé relatif à la deuxième possibilité comprend une étape supplémentaire consistant à prévulcaniser à température donnée le mélange d'enrobage à l'aide d'un moyen de chauffage adapté.

La "nappe calandrée une face", obtenue en continu, peut être enroulée sur elle-même, comme connu en soi, au moyen d'une couche intercalaire soit de tissu, soit de polyéthylène par exemple servant d'anti-collant, pour former des rouleaux de nappe. Les dits rouleaux servent à alimenter une table de préparation des nappes selon qu'elles sont nappes de carcasse ou nappes de sommet. Comme connu en soi, la préparation d'une nappe de carcasse nécessite une coupe des éléments de renforcement perpendiculairement à leur direction commune de manière à obtenir la longueur méridienne souhaitée, alors que la préparation d'une nappe de sommet nécessite une coupe des éléments de renforcement suivant une certain angle et l'aboutage des portions de nappe obtenues pour conduire à la longueur circonférentielle désirée de la nappe de sommet.

La fabrication de la nappe de renforcement, destinée à être utilisée dans le pneumatique, est complétée et terminée par l'addition, sur la deuxième face de "la nappe calandrée une face" d'éléments de renforcement enrobés et coupés, de la deuxième couche de calandrage, ladite deuxième couche n'ayant pas de composition et propriétés constantes. Ladite addition peut se faire de plusieurs manières :
- soit par mise en contact de la "nappe calandrée une face", après coupe, avec la deuxième couche de calandrage de composition et propriétés variables en fonction de la position méridienne, couche antérieurement préparée, par exemple, sur un appareillage indépendant des noyaux ou tambours de confection et/ou finition des ébauches non vulcanisées d'armature de carcasse et/ou de pneumatiques, (par exemple une table de préparation de nappes), ladite mise en contact pouvant être réalisée, soit par pose de la "nappe calandrée une face" sur la deuxième couche de calandrage, soit par pose de ladite deuxième couche de calandrage sur la face appropriée, face où sont apparents les éléments de renforcement enrobés de la "nappe calandrée une face", ladite deuxième couche pouvant être sous forme de bandes de mélanges à composition et propriétés différentes d'une bande à la bande axialement adjacente, ou sous forme de couche unique de mélange dans laquelle la transition d'une composition de bande à une autre composition de bande se fait de manière progressive, et/ou de manière continue ;
- soit préférentiellement par mise en contact de la "nappe calandrée une face", après coupe, avec la deuxième couche de calandrage de composition et propriétés variables en fonction de la position méridienne, couche préparée sur l'appareil utilisé pour la confection et/ou la finition des ébauches non vulcanisées d'armature de carcasse et/ou de pneumatiques (tambour cylindrique de confection d'ébauche d'armature de carcasse, tambour de finition de l'ébauche de pneumatique sous forme torique), ladite mise en contact pouvant être réalisée soit par pose de la face de la" nappe calandrée une face" où sont apparents les éléments de renforcement enrobés, sur la deuxième couche de calandrage disposée initialement sur l'ébauche non vulcanisée en cours de fabrication, soit par pose de la deuxième couche de calandrage sur la "nappe calandrée une face" prédisposée sur l'ébauche en cours de fabrication, la dite deuxième couche pouvant se présenter sous les deux formes citées ci-dessus.

Les caractéristiques de l'invention seront mieux comprises à l'aide de la description qui suit et qui se réfère au dessin, illustrant à titre non limitatif des exemples d'exécution, dessin sur lequel :
* la figure 1 représente schématiquement, vu en section méridienne, un pneumatique comportant des nappes de sommet et une nappe de carcasse conformes à une variante de l'invention,
* la figure 2 est une vue schématique en coupe selon AA, alors que
* la figure 3 est une vue schématique en coupe selon BB,
* la figure 4 représente schématiquement, vue en section méridienne, une armature de sommet composée de deux nappes,
* la figure 5 représente schématiquement les différentes étapes de fabrication d'une "nappe calandrée une face".

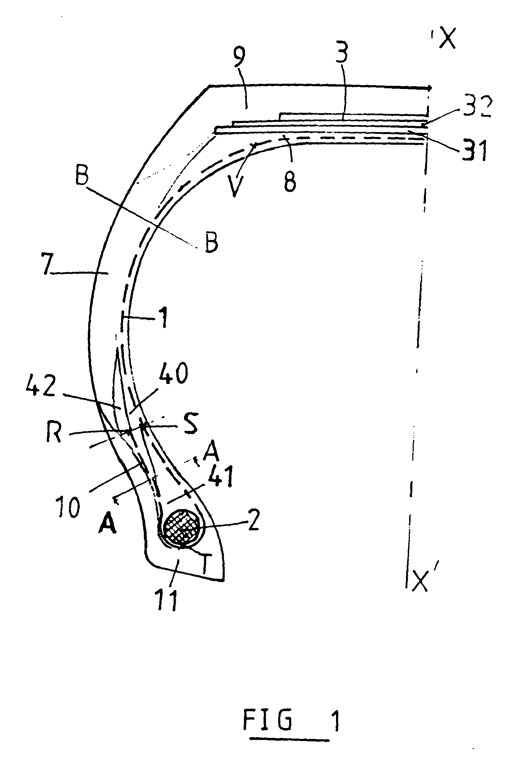

Le pneumatique, montré sur la figure 1, est un pneumatique de type "Poids-Lourds" de petite dimension 9.00/20 X. Il est constitué d'une armature de carcasse radiale, formée d'une seule nappe (1) d'éléments de renforcement, en l'occurrence de câbles métalliques inextensibles, ancrée dans chaque bourrelet à un élément annulaire de renforcement de bourrelet, en l'occurrence une tringle (2), pour former un retournement (10). Ladite armature de carcasse est surmontée radialement d'une armature de sommet (3), composée d'une part, de deux nappes de sommet de travail (31, 32), formées de câbles métalliques inextensibles parallèles entre eux dans chaque nappe et croisés d'une nappe (31) à la suivante (32) en faisant avec la direction circonférentielle des angles compris entre 10° et 45°, et dans le cas décrit respectivement égaux à 26° et 18°, et d'autre part, radialement à l'extérieur, d'une nappe de câbles métalliques élastiques orientés par rapport à la direction circonférentielle avec le même angle que l'angle des câbles de la nappe de sommet de travail (32) radialement la plus à l'extérieur. L'armature de sommet (3) est radialement réunie à l'armature de carcasse (1) par une couche (8) de mélange caoutchouteux d'épaisseur constante dans la partie centrale, et d'épaisseur croissante en allant sur les bords de l'armature de sommet (3). Ladite armature de sommet (3) est radialement surmontée d'une bande de roulement (9), réunie de part et d'autre du plan équatorial à un mélange de flanc (7), recouvrant, dans le flanc du pneumatique, l'armature de carcasse (1) et assurant la jonction, d'une part avec les mélanges (40, 41, 42) renforçant le bourrelet et, d'autre part avec le mélange (11) assurant la protection dudit bourrelet et le contact avec la jante de service. Une couche de revêtement intérieure (5) de la cavité pneumatique et différents renforts caoutchouteux entre ladite couche et l'armature de carcasse complètent le pneumatique.

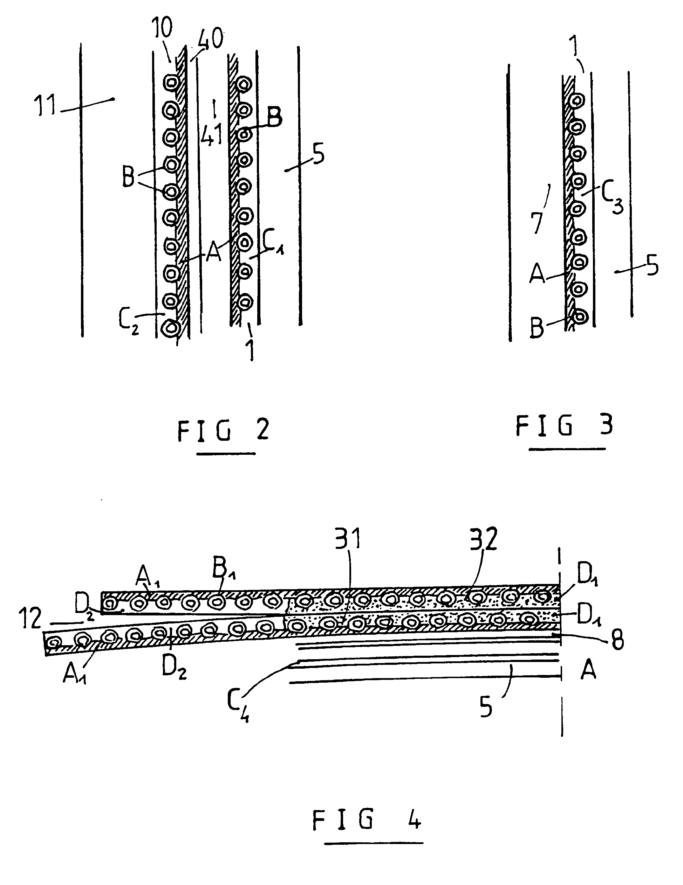

La nappe (1) d'armature de carcasse est, dans l'exemple décrit, formée de câbles métalliques en acier inextensibles enrobés dans un mélange de caoutchouc B, dont la composition est adaptée de sorte que ledit mélange à l'état vulcanisé adhère parfaitement à la couche laitonnée recouvrant l'acier des câbles de renforcement. Les dits câbles enrobés du mélange B sont calandrés, sur toute la longueur méridienne du côté extérieur de la nappe (1) de carcasse, y compris les retournements de nappe de carcasse, par une couche de mélange caoutchouteux A. première couche de calandrage ou couche de support, car il s'agit de la couche sur ou sous laquelle sont posés les câbles de nappe de carcasse lors de la fabrication de la "nappe calandrée une face". Quant à la couche intérieure de calandrage de la nappe (1), qui est la deuxième couche C de calandrage, elle est formée de plusieurs bandes ou couches circonférentielles de mélanges caoutchouteux de composition et qualités différentes d'une bande à la bande adjacente, la composition et les propriétés d'une bande étant choisies selon la position méridienne de ladite bande sur la longueur méridienne de la carcasse : du point T de la tringle (2) radialement le plus proche de l'axe de rotation, au point S d'intersection entre l'axe moyen du profil méridien de la nappe de carcasse (1) et la perpendiculaire au dit profil abaissée de l'extrémité du retournement (10) de nappe (1), la zone TS étant dite zone de bourrelet, la couche C est constituée d'une première bande C₁ de mélange caoutchouteux. Dudit point T au point R représentant l'extrémité du retournement (10) de nappe de carcasse (1), la zone TR étant dite zone de retournement, la couche C est constituée d'une deuxième bande C₂ de mélange caoutchouteux (la figure 2 représente les différentes couches dans la zone du bourrelet de pneumatique). Entre le point S et un point V d'intersection de l'axe moyen du profil méridien de nappe de carcasse (1) avec une droite parallèle au plan équatorial et distante dudit plan d'une quantité pouvant être comprise entre 30% et 45% de la largeur axiale de bande de roulement (9), dans le cas décrit égale à 35% de la dite largeur de bande de roulement, la zone SV étant dite zone de flanc et d'épaule, la couche C est constituée d'une troisième bande C₃ de mélange caoutchouteux. Entre le point V et le plan équatorial XX' formant la zone dite de sommet, la quatrième bande C₄ de mélange forme la couche C.

Dans l'exemple montré sur les figures 1 à 3, les couches ou bandes A, B, C₁, C₂ et C₄ sont formées d'un même mélange caoutchouteux qui. à l'état vulcanisé , a un module sécant d'élasticité en tension, mesuré sous un allongement relatif ε égal à 0,1, (le module ainsi défini est déterminé conformément à la norme AFNOR-NF-T46-002 dans les conditions normales de température et d'hygrométrie selon la norme AFNOR-NF T40-101, et sera dans le reste de la description appelé plus simplement module) est compris entre 6 MPa et 12 MPa, alors que le mélange de la couche C₃ de calandrage de la partie de nappe de carcasse (1) dans la zone de flanc et d'épaule est constituée d'un mélange caoutchouteux dont le module de même nom et mesuré dans les mêmes conditions est nettement moins élevé, puisque compris entre 3,5 MPa et 5 MPa. Le premier mélange ci-dessus possède, à l'état non vulcanisé, une viscosité Mooney assez élevée, comprise entre 60 UM et 90 UM, alors que le mélange de la couche C₃ a une viscosité du même nom inférieure puisque comprise entre 55 UM et 75 UM (la viscosité Mooney étant mesurée conformément à la nonne AFNOR-NF-T43-005).

Pour une autre dimension de pneumatique, et en fonction des avaries d'endurance rencontrées sur une telle dimension, la couche B d'enrobage sera réalisée avec un mélange à très fort module, compris entre 27 MPa et 45 MPa, et à très forte viscosité Mooney comprise entre 70 UM et 100 UM, alors que la couche de support A sera constituée d'un mélange à module moins élevé que le précédent, mais cependant élevé car compris entre 10 MPa et 15 MPa, et à viscosité Mooney elle-même élevée et comprise entre 60 UM et 90 UM. La couche C₁ sera constituée du même mélange que la couche A : par contre la couche C₂ sera une bande de mélange dont le module est faible, puisque compris entre 3.5 MPa et 5 MPa, et de viscosité Mooney plus faible comprise entre 55 UM et 75 UM. mélange qui sera aussi celui de la bande C₃, alors que la couche C₄ sera réalisée avec un mélange de module intermédiaire, compris entre 6 MPa et 12 MPa, et de viscosité comprise entre 60 UM et 90 UM.

Une autre solution bénéfique consiste à choisir comme mélange caoutchouteux de la couche A de support un mélange de faible module d'élasticité à l'état vulcanisé, et d'utiliser la dite couche de support comme calandrage intérieur de la nappe de carcasse (1), les couches C'₁, C'₃, et C'₄ formant alors la couche C' de calandrage extérieure de nappe de carcasse (1). Le mélange de la couche B sera identique à celui de l'exemple précédent, le mélange de la couche A sera le mélange constituant la couche C₂ de l'exemple précédent avec un module compris entre 3,5 MPa et 5 MPa, et une viscosité comprise entre 55 UM et 75 UM. D'un point U du retournement de nappe de carcasse, situé radialement sensiblement à mi-hauteur dudit retournement (10) au point S précédemment décrit en passant sous la tringle (2), la bande C'₁ est formée d'un mélange à haut module d'élasticité compris entre 10 MPa et 15 MPa, et forte viscosité comprise entre 60 UM et 90 UM. alors que dudit point U au point R de l'extrémité de retournement (10), la bande C'₂ sera formée du même mélange que celui constituant la couche de support A. Il en est de même de la couche C'₃ du point S au point V, alors que la couche C'₄ sera formée du même mélange que celui constituant la couche C₄ de l'exemple précédent.

On ne sort pas du cadre de l'invention si la couche C, qu'elle soit de calandrage intérieur ou extérieur, est obtenue par enroulement d'une bandelette de mélange caoutchouteux dont la composition et les propriétés varient de manière continue, et/ou le passage ou transition d'une composition de mélange dans une zone de nappe de carcasse à la composition de mélange dans une zone adjacente se fait de manière progressive (par exemple passage du mélange formant la couche C₃ au mélange formant la couche C₄) : la bandelette de formation de la couche C peut être obtenue, comme connue en soi, .par malaxage et/ou mélangeage sur un broyeur-mélangeur d'une ou deux quantités de granulés de caoutchouc (dans l'exemple choisi, granulés des deux mélanges formant les couches C₃ et C₄) ; le broyeur-mélangeur étant alimenté à partir de plusieurs trémies contenant chacune un mélange de caoutchouc de composition et propriétés données sous forme de granulés, et les quantités désirées étant obtenues par l'ouverture de goulottes d'alimentation, ouverture gouvernée par des vannes de contrôle d'alimentation, ce qui permet d'obtenir une zone de transition entre les couches C₃ et C₄ où le mélange formant C₃ change progressivement de composition pour devenir le mélange formant C₄.

La figure 4 représente une armature de sommet de travail (3) formée de deux nappes (31) et (32). La nappe de travail (31) radialement la plus proche de l'axe de rotation, est formée de plusieurs câbles métalliques en acier enrobés individuellement dans un mélange de caoutchouc B₁, qui présente dans l'exemple décrit, un module d'extension très élevé puisque compris entre 15 MPa et 30 MPa, et de viscosité Mooney de même élevée, comprise entre 65 UM et 95 UM. Radialement à l'intérieur est la première couche de calandrage ou couche de support A₁, constituée d'un unique mélange caoutchouteux de composition et propriétés identiques aux composition et propriétés du mélange d'enrobage B₁. Radialement à l'extérieur, se trouve la deuxième couche de calandrage D constituée de plusieurs zones de mélanges de composition et propriétés différentes :
- une zone centrale D₁, de largeur axiale 1 comprise entre 70% et 90% de la largeur axiale L_{S} commune aux deux nappes de travail (31) et (32), est constituée d'un mélange de module élevé, compris entre 15 MPa et 30 MPa, et de viscosité comprise entre 65 UM et 95 UM, mélange qui est donc identique aux mélanges constituant la couche de support A₁ et l'enrobage B₁ des câbles ;
- de deux bandes latérales D₂, dans le cas décrit de largeur identique, et constituées d'un mélange de caoutchouc à module relativement faible puisque compris entre 3 MPa et 9 MPa, et de viscosité Mooney comprise entre 50 UM et 85 UM.

Quant à la nappe de sommet de travail (32) radialement plus éloignée de l'axe de rotation que la nappe (31), et de largeur axiale inférieure à ladite nappe (31), elle est de constitution identique à celle de la nappe (31), mais la couche de support A₁ est alors radialement située à l'extérieur de la nappe et les trois zones D₁ et D₂ de la couche D sont radialement à l'intérieur de ladite couche D, de sorte que les dites trois zones de la nappe (32) se trouvent en regard des trois zones de la première nappe (31), en particulier les zones latérales D₂ de mélange à faible module d'élasticité, ce qui permet de diminuer fortement l'épaisseur du coin de caoutchouc (12) disposé entre les deux bords de nappes et de le poser en confection sous forme de bandes plates.

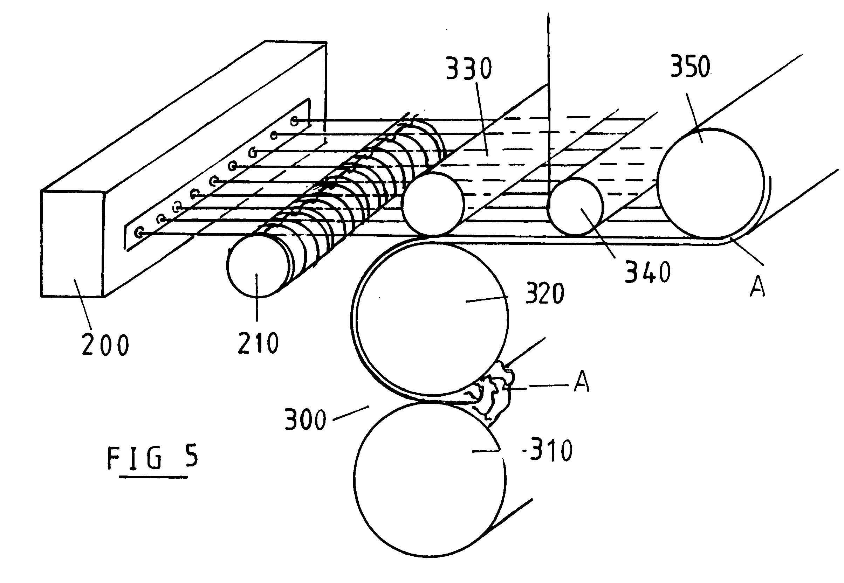

La fabrication du pneumatique, conforme à l'invention, nécessite plusieurs étapes préliminaires avant la vulcanisation dudit pneumatique, et en particulier la confection ou fabrication de la dite "nappe calandrée une face". Sur la figure 5 est représenté un ensemble de bobines (100) sur lesquelles sont enroulés le câble métallique destiné à être utilisé dans la nappe à confectionner. Plusieurs câbles sont dirigés vers une extrudeuse (200) dont la tête a plusieurs filières, adaptées pour enrober les dits câbles de la couche (B, B₁) de mélange d'enrobage à une épaisseur prédéterminée. Les dits câbles enrobés sont ensuite dirigés vers un outil, en l'occurrence un rouleau cannelé (210), permettant de séparer chaque câble du câble axialement adjacent de la distance ou pas désiré, puis vers une calandre (300) à deux rouleaux (310) et (320). Une quantité de mélange caoutchouteux devant constituer la couche de support (A, A₁) de la "nappe calandrée une face", initialement préchauffée à une température permettant de ramollir le dit mélange sans toutefois le vulcaniser ou prévulcaniser, est introduite entre les deux rouleaux (310) et (320). Le passage entre les deux rouleaux conduit à l'obtention d'une bande plate de mélange, sur laquelle les câbles enrobés viendront prendre contact à la partie radialement supérieure du rouleau supérieur (320). Un rouleau auxiliaire (330) dit rouleau presseur, permet d'appliquer, si nécessaire, une pression donnée sur les câbles, pression régulée en fonction de la profondeur souhaitée d'encastrement des câbles dans la bande plate A. Un rouleau (340) dépose correctement une bande intercalaire anti-collante, généralement en polyéthylène, soit sur la face où sont apparents les câbles enrobés, soit sur la face opposée, de manière à pouvoir enrouler, comme connu en soi, la "nappe calandrée une face" sur un rouleau (350) d'enroulement, destiné à approvisionner les coupeuses et les tables de préparation de nappes, les éléments de renforcement étant dans le sens de la longueur de nappe.

Comme connu en soi, la "nappe calandrée une face", selon qu'il s'agisse de préparer une laize pour nappe de carcasse ou une laize pour nappe de sommet, est coupée soit perpendiculairement à la direction commune des éléments de renforcement, soit avec un certain angle α par rapport à ladite direction commune des éléments de renforcement, angle α qui sera, dans le pneumatique terminé, l'angle des éléments par rapport à la direction circonférentielle dudit pneumatique. Les laizes ainsi obtenues sont ensuite assemblées, aboutées, soit bout à bout s'il s'agit d'éléments de renforcement métalliques, soit avec recouvrement d'un bord sur l'autre s'il s'agit d'éléments de renforcement textiles. Dans le cas d'un aboutage bout à bout, ce dernier peut se faire par apport d'une petite couche plate de gomme dite de liaison, posée sur la jonction ou posée sur l'un des bords pour ensuite passer sous l'autre bord.

Les laizes ainsi assemblées forment la "nappe calandrée une face" prête à être utilisée par exemple sur les moyens de fabrication de l'ébauche non vulcanisée et partielle de pneumatique. La réalisation complète de la nappe de carcasse se fait, par exemple, par la pose de la "nappe calandrée une face" sur les différentes couches de mélanges caoutchouteux et différentes nappes de renforcement de bourrelet prédisposées sur le tambour cylindrique de confection de l'ébauche cylindrique de carcasse, de sorte que la couche de support A soit disposée radialement à l'intérieur. Sur les éléments de renforcement apparents de la "nappe calandrée une face" sont alors posées les différentes couches circonférentielles C₁, C₂, C₃ ..etc...., nécessaires pour former la couche extérieure C de calandrage, les dites couches étant, à l'état non vulcanisé, d'épaisseurs choisies pour obtenir les épaisseurs désirées à l'état vulcanisé, compte-tenu du taux de conformation de l'ébauche de carcasse transformant ladite ébauche cylindrique en ébauche torique d'armature de carcasse. La finition de la nappe de carcasse étant réalisée sur le tambour cylindrique de confection, les prochaines étapes de ladite confection sont les étapes usuelles et connues en soi : pose des tringles d'ancrage de nappe de carcasse, pose des différents bourrages de caoutchouc de remplissage de bourrelet, gommes de bordure ou autres, retournement des bords de nappe de carcasse autour des tringles et bourrages .. etc ...

La réalisation d'une nappe de sommet complète (31) est aussi finie de la même manière, c'est-à-dire sur un tambour de fabrication d'une ébauche non vulcanisée de pneumatique : après pose, sur une ébauche non vulcanisée et torique d'armature de carcasse, des différentes couches (8) de mélanges caoutchouteux séparant radialement l'armature de carcasse (1) de l'armature de sommet (3), est posée une "nappe calandrée une face", non vulcanisée et formée d'éléments de renforcement enrobés individuellement dans un mélange caoutchouteux B₁, ayant une composition et des propriétés données, les dits éléments de renforcement disposés parallèlement entre eux étant recouverts sur une face d'une première couche caoutchouteuse A₁ ou couche de support, de composition et propriétés constantes, ladite "nappe calandrée une face" étant mise en contact avec une deuxième couche de calandrage D de composition et propriétés variables en fonction de la largeur axiale de la nappe de sommet (31) dans le pneumatique. Quant à la fabrication d'une armature de sommet de travail (3) à deux nappes (31) et (32), on peut poser sur les couches (8) une première "nappe calandrée une face", la couche de support A₁ de ladite nappe étant radialement à l'intérieur, puis, sur les éléments de renforcement apparents de ladite première "nappe calandrée une face" sont posées les différentes couches de mélange caoutchouteux D₁ et D₂ formant la deuxième couche de calandrage de ladite première nappe de sommet (31), radialement la plus proche de l'armature de carcasse. La fabrication de la deuxième nappe de sommet (32)est réalisée de manière identique, mais en commençant par la pose des couches D₁ et D₂, qui sont alors recouvertes radialement d'une deuxième "nappe calandrée une face", se présentant de sorte que les éléments de renforcement apparents de ladite deuxième nappe soient radialement à l'intérieur de ladite nappe.

La finition et la vulcanisation de l'ébauche torique de pneumatique sont alors poursuivies de manière usuelle et connue.

## Revendications

1. - Pneumatique ayant au moins une nappe de renforcement (1, 31, 32) constituée d'éléments de renforcement noyés dans du caoutchouc vulcanisé, lesdits éléments de renforcement de ladite nappe étant enrobés individuellement dans un mélange caoutchouteux (B, B₁), dit mélange d'enrobage, ayant une composition et des propriétés physiques données, les dits éléments de renforcement disposés parallèlement entre eux étant recouverts sur une face d'une première couche caoutchouteuse (A, A₁), dite première couche de calandrage, de composition et propriétés constantes, alors que les dits éléments sont recouverts sur la face opposée d'une deuxième couche caoutchouteuse de calandrage (C, D), **caractérisé en ce que** ladite deuxième couche caoutchouteuse de calandrage a une composition et des propriétés variables en fonction de la position méridienne sur la nappe dans le pneumatique.

2. - Pneumatique selon la revendication 1, **caractérisé en ce que** les composition et propriétés de la première couche (A, A₁) sont identiques aux composition et propriétés du mélange d'enrobage (B, B₁) des éléments de renforcement de la nappe.

3. - Pneumatique selon la revendication 2, **caractérisé en ce que** la nappe de renforcement est une nappe (1) d'armature de carcasse.

4. - Pneumatique selon la revendication 3, **caractérisé en ce que** la nappe (1) d'armature de carcasse, dans sa partie principale sur sa face extérieure et dans sa partie retournée sur sa face axialement intérieure, est calandrée avec la première couche A de composition et propriétés constantes, alors que les faces opposées sont recouvertes de la deuxième couche de calandrage C de composition et propriétés variables en fonction de la longueur méridienne de la nappe (1) dans le pneumatique.

5. - Pneumatique selon la revendication 4, **caractérisé en ce que** le mélange d'enrobage B a mêmes composition et propriétés que celles du mélange de la première couche de calandrage A, le module sécant d'élasticité en tension du dit mélange à l'état vulcanisé, mesuré sous un allongement relatif de 0,1, étant compris entre 6 et 12 MPa, alors que la viscosité Mooney dudit mélange à l'état non vulcanisé est comprise entre 60 UM et 90 UM.

6. - Pneumatique selon la revendication 4, **caractérisé en ce que** la deuxième couche C est formée :
* d'une première bande C₁ de mélange caoutchouteux, allant du point T de la tringle (2) radialement le plus proche de l'axe de rotation, au point S d'intersection entre l'axe moyen du profil méridien de la nappe de carcasse (1) et la perpendiculaire au dit profil abaissée de l'extrémité du retournement (10) de nappe (1), la zone TS étant dite zone de bourrelet,
* d'une deuxième bande C₂ de mélange caoutchouteux, allant dudit point T au point R représentant l'extrémité du retournement (10) de nappe de carcasse (1), la zone TR étant dite zone de retournement,
* d'une troisième bande C₃ de mélange caoutchouteux, entre le point S et un point V, d'intersection de l'axe moyen du profil méridien de nappe de carcasse (1) avec une droite parallèle au plan équatorial et distante dudit plan d'une quantité pouvant être comprise entre 30% et 45% de la largeur axiale de la bande de roulement (9), la zone SV étant dite zone de flanc et d'épaule,
* d'une quatrième bande C₄ de mélange caoutchouteux, entre le point V et le plan équatorial XX', formant la zone dite de sommet, les bandes C₁, C₂ et C₄ étant constituées du même mélange dont le module d'élasticité est compris entre 6 MPa et 12 MPa et dont la viscosité Mooney est comprise entre 60 UM et 90 UM, alors que la bande C₃ est constituée d'un mélange dont le module d'élasticité est compris entre 3,5 MPa et 5 MPa et dont la viscosité Mooney est comprise entre 55 UM et 75 UM.

7. - Pneumatique selon la revendication 2, **caractérisé en ce que** la nappe de renforcement est une nappe (31, 32) d'armature de sommet (3), formée d'éléments de renforcement parallèles entre eux dans ladite nappe et faisant avec la direction circonférentielle du pneumatique un angle aigu, la position méridienne étant jugée sur la largeur axiale de ladite nappe (31, 32).

8. - Pneumatique selon la revendication 7, **caractérisé en ce qu'**il comprend une armature de sommet (3) formée d'au moins deux nappes de sommet de travail (31, 32), la nappe (31) radialement la plus proche de l'armature de carcasse étant calandrée sur sa face radialement intérieure d'une première couche de calandrage A₁ de composition et propriétés constantes, et sur sa face radialement extérieure d'une deuxième couche de calandrage D de composition et propriétés variables en fonction de la largeur axiale de ladite nappe (31), alors que la nappe (32) radialement à l'extérieur de la nappe (31) est calandrée sur sa face radialement extérieure de la première couche de calandrage A₁ de composition et propriétés constantes et sur sa face radialement intérieure de la deuxième couche de calandrage D de composition et propriétés variables en fonction de la largeur axiale de ladite nappe (32).

9. - Pneumatique selon la revendication 8, **caractérisé en ce que** le mélange de caoutchouc constituant d'une part la première couche de calandrage A₁ et d'autre part le mélange d'enrobage B₁ des éléments de renforcement de la nappe de sommet (31, 32) possède, à l'état non vulcanisé une viscosité Mooney comprise entre 65 UM et 95 UM, et à l'état vulcanisé un module sécant d'élasticité sous tension, mesuré à 10% d'allongement relatif, compris entre 15 MPa et 30 MPa.

10. - Pneumatique selon la revendication 9, **caractérisé en ce que** les deuxièmes couches de calandrage D sont au moins formées de trois zones, une zone centrale D₁, constituée d'un mélange caoutchouteux ayant à l'état vulcanisé un fort module d'élasticité sous tension, compris entre 15 MPa et 30 MPa, et à l'état non vulcanisé une viscosité Mooney comprise entre 65 UM et 95 UM, et deux zones latérales D₂ constituées d'un mélange caoutchouteux ayant à l'état vulcanisé un faible module d'élasticité sous tension, compris entre 3 MPa et 9 MPa, et à l'état non vulcanisé une viscosité Mooney comprise entre 50 et 85 UM.

11. - Pneumatique selon la revendication 1, **caractérisé en ce que** les composition et propriétés de la première couche (A, A₁) sont différentes des composition et propriétés du mélange d'enrobage (B, B₁) des éléments de renforcement de la nappe.

12. - Pneumatique selon la revendication 11, **caractérisé en ce que** la nappe de renforcement est une nappe (1) d'armature de carcasse.

13. - Pneumatique selon la revendication 12, **caractérisé en ce que** la nappe (1) d'armature de carcasse, dans sa partie principale sur sa face extérieure et dans sa partie retournée sur sa face axialement intérieure, est calandrée avec la première couche A de composition et propriétés constantes, alors que les faces opposées sont recouvertes de la deuxième couche C de calandrage de composition et propriétés variables en fonction de la longueur méridienne de la nappe (1) dans le pneumatique.

14. - Pneumatique selon la revendication 13, **caractérisé en ce que** le mélange d'enrobage B à l'état vulcanisé a un module d'élasticité compris entre 27 MPa et 45 MPa et à l'état non vulcanisé une viscosité Mooney comprise entre 70 UM et 100 UM, alors que le module d'élasticité à l'état vulcanisé du mélange de la première couche de calandrage A est compris entre 10 MPa et 15 MPa et une viscosité Mooney à l'état non vulcanisé comprise entre 60 UM et 90 UM.

15. - Pneumatique selon la revendication 4, **caractérisé en ce que** la deuxième couche C est formée :
* d'une première bande C₁ de mélange caoutchouteux, allant du point T de la tringle (2) radialement le plus proche de l'axe de rotation, au point S d'intersection entre l'axe moyen du profil méridien de la nappe de carcasse (1) et la perpendiculaire au dit profil abaissée de l'extrémité du retournement (10) de nappe (1), la zone TS étant dite zone de bourrelet,
* d'une deuxième bande C₂ de mélange caoutchouteux, allant dudit point T au point R représentant l'extrémité du retournement (10) de nappe de carcasse (1), la zone TR étant dite zone de retournement,
* d'une troisième bande C₃ de mélange caoutchouteux, entre le point S et un point V, d'intersection de l'axe moyen du profil méridien de nappe de carcasse (1) avec une droite parallèle au plan équatorial et distante dudit plan d'une quantité pouvant être comprise entre 30% et 45% de la largeur axiale de bande de roulement (9), la zone SV étant dite zone de flanc et d'épaule,
* d'une quatrième bande C₄ de mélange caoutchouteux, entre le point V et le plan équatorial XX', formant la zone dite de sommet, les bandes C₂ et C₃ étant constituées du même mélange dont le module d'élasticité est compris entre 3,5 MPa et 5 MPa et dont la viscosité Mooney est comprise entre 55 UM et 75 UM, alors que la bande C₁ est constituée d'un mélange dont le module d'élasticité est compris entre 10 MPa et 15 MPa et dont la viscosité Mooney est comprise entre 60 UM et 90 UM, et que la bande C₄ est constituée d'un mélange dont le module d'élasticité est compris entre 6 MPa et 12 MPa et dont la viscosité Mooney est comprise entre 60 UM et 90 UM.

16. - Pneumatique selon la revendication 12, **caractérisé en ce que** la nappe (1) d'armature de carcasse, dans sa partie principale sur sa face intérieure et dans sa partie retournée sur sa face axialement extérieure, est calandrée avec la première couche A de composition et propriétés constantes, alors que les faces opposées sont recouvertes de la deuxième couche C' de calandrage de composition et propriétés variables en fonction de la longueur méridienne de la nappe (1) dans le pneumatique.

17. - Pneumatique selon la revendication 16, **caractérisé en ce que** le mélange d'enrobage B à l'état vulcanisé a un module d'élasticité compris entre 27 MPa et 45 MPa et à l'état non vulcanisé une viscosité Mooney comprise entre 70 UM et 100 UM, alors que le module d'élasticité à l'état vulcanisé du mélange de la première couche de calandrage A est compris entre 3,5 MPa et 5 MPa et la viscosité Mooney dudit mélange A à l'état non vulcanisé comprise entre 55 UM et 75 UM.

18. - Pneumatique selon la revendication 4, **caractérisé en ce que** la deuxième couche C est formée :
* d'une première bande C'₁ de mélange caoutchouteux, allant du point U du retournement (10) de nappe de carcasse (1),situé sensiblement à mi-hauteur dudit retournement (10) au point S d'intersection entre l'axe moyen du profil méridien de la nappe de carcasse (1) et la perpendiculaire au dit profil abaissée de l'extrémité du retournement (10) de nappe (1),
* d'une deuxième bande C'₂ de mélange caoutchouteux, allant dudit point U au point R représentant l'extrémité du retournement (10) de nappe de carcasse (1),
* d'une troisième bande C₃ de mélange caoutchouteux, entre le point S et un point V, d'intersection de l'axe moyen du profil méridien de nappe de carcasse (1) avec une droite parallèle au plan équatorial et distante dudit plan d'une quantité pouvant être comprise entre 30% et 45% de la largeur axiale de bande de roulement (9), la zone SV étant dite zone de flanc et d'épaule,
* d'une quatrième bande C₄ de mélange caoutchouteux, entre le point V et le plan équatorial XX', formant la zone dite de sommet, les bandes C'₂ et C'₃ étant constituées du même mélange dont le module d'élasticité est compris entre 3,5 MPa et 5 MPa et dont la viscosité Mooney est comprise entre 55 UM et 75 UM, alors que la bande C'₁ est constituée d'un mélange dont le module d'élasticité est compris entre 10 MPa et 15 MPa et dont la viscosité Mooney est comprise entre 60 UM et 90 UM, et que la bande C'₄ est constituée d'un mélange dont le module d'élasticité est compris entre 6 MPa et 12 MPa et dont la viscosité Mooney est comprise entre 60 UM et 90 UM.

19. - Pneumatique selon la revendication 1, **caractérisé en ce que** la nappe de renforcement est une nappe d'armature de sommet formée d'éléments circonférentiels.

20. - Pneumatique selon la revendication 1, **caractérisé en ce que** la nappe de renforcement est une nappe de renforcement de bourrelet.

21. - Pneumatique selon la revendication 1, **caractérisé en ce que** la nappe de renforcement est une nappe de renforcement de flanc.

22. - Procédé de fabrication d'un pneumatique selon l'une des revendications 3 ou 12, consistant dans un premier temps à confectionner sur un tambour une ébauche cylindrique non vulcanisée d'armature de carcasse comprenant au moins une nappe de carcasse (1), procédé dans lequel la confection de la nappe de carcasse (1) nécessite, après la pose sur le tambour cylindrique de confection de l'ébauche cylindrique d'armature de carcasse des différentes couches de mélanges caoutchouteux et différentes nappes de renforcement de bourrelet, la pose d'un produit intermédiaire dit "nappe calandrée une face", non vulcanisée et formée d'éléments de renforcement enrobés individuellement dans un mélange caoutchouteux B, dit mélange d'enrobage, ayant une composition et des propriétés physiques données, les dits éléments de renforcement disposés parallèlement entre eux étant recouverts sur une face d'une première couche caoutchouteuse A, dite première couche de calandrage ou couche de support, de composition et propriétés constantes, ladite "nappe calandrée une face" étant mise en contact avec une deuxième couche de calandrage C, **caractérisé en ce que** ladite deuxième couche de calandrage a une composition et des propriétés variables en fonction de la position sur la longueur méridienne de la nappe (1) dans le pneumatique.

23. - Procédé selon la revendication 22, **caractérisé en ce que** la "nappe calandrée une face" non vulcanisée est utilisée avec des éléments de renforcement enrobés individuellement dans un mélange caoutchouteux B non vulcanisé.

24. - Procédé selon la revendication 23, **caractérisé en ce que** la "nappe calandrée une face" non vulcanisée est utilisée avec des éléments de renforcement enrobés individuellement dans un mélange caoutchouteux B prévulcanisé à une température donnée à l'aide d'un moyen de chauffage adapté.

25. - Procédé selon l'une des revendications 22 à 24, **caractérisé en ce que** la mise en contact se réalise par la pose, sur les différentes couches de mélanges caoutchouteux et différentes nappes de renforcement de bourrelet recouvrant le tambour cylindrique de confection de l'ébauche cylindrique d'armature de carcasse (1), de "la nappe calandrée une face" d'éléments de renforcement enrobés, et la pose sur les éléments enrobés apparents de la "nappe calandrée une face" de la deuxième couche C de calandrage de composition et propriétés variables en fonction de la longueur méridienne de la nappe (1) dans le pneumatique.

26. - Procédé selon l'une des revendications 22 à 24, **caractérisé en ce que** la mise en contact se réalise par la pose, sur les différentes couches de mélanges caoutchouteux et différentes nappes de renforcement de bourrelet recouvrant le tambour cylindrique de confection de l'ébauche cylindrique de carcasse, de la deuxième couche de calandrage C de composition et propriétés variables en fonction de la longueur méridienne de la nappe (1) dans le pneumatique et la pose sur ladite deuxième couche de "la nappe calandrée une face" d'éléments de renforcement enrobés, les dits éléments étant posés sur la deuxième couche C.

27. - Procédé de fabrication d'un pneumatique selon la revendication 7, consistant à un instant donné à disposer sur une ébauche torique d'armature de carcasse (1) non vulcanisée une nappe de sommet (31, 32) d'éléments de renforcement parallèles entre eux dans la nappe et faisant avec la direction circonférentielle un angle aigu, **caractérisé en ce que** la confection de la nappe de sommet (31, 32) nécessite, après la pose sur l'ébauche torique de carcasse des différentes couches (8) de mélanges caoutchouteux séparant radialement l'armature de carcasse (1) de l'armature de sommet (3), la pose d'une nappe intermédiaire dite "nappe calandrée une face", non vulcanisée et formée d'éléments de renforcement enrobés individuellement dans un mélange caoutchouteux B₁, dit mélange d'enrobage, ayant une composition et des propriétés physiques données, les dits éléments de renforcement disposés parallèlement entre eux étant recouverts sur une face d'une première couche caoutchouteuse A₁ ou couche de support, de composition et propriétés constantes, ladite "nappe calandrée une face" étant mise en contact avec une deuxième couche de calandrage D de composition et propriétés variables en fonction de la largeur axiale de la nappe de sommet (31, 32) dans le pneumatique.

28. - Procédé de fabrication selon la revendication 27 d'un pneumatique ayant une armature de sommet (3) formée de deux nappes (31, 32) selon la revendication 8, **caractérisé en ce que** l'on pose :
a) sur une ébauche non vulcanisée et torique d'armature de carcasse (1), une "nappe calandrée une face", la couche de support A₁ de ladite nappe étant radialement à l'intérieur,
b) puis sur les éléments de renforcement apparents de la "nappe calandrée une face", la deuxième couche caoutchouteuse de calandrage D de la nappe de sommet (31) radialement intérieure, couche de composition et propriétés variables en fonction de la largeur axiale de la nappe dans le pneumatique, les couches A₁ et D formant avec les éléments enrobés la nappe de sommet (31) la plus proche de l'armature de carcasse (1),
c) puis la deuxième couche caoutchouteuse de calandrage (D) de la nappe de sommet (32) radialement adjacente à la nappe intérieure (31), couche de composition et propriétés variables en fonction de la largeur axiale de la nappe (32) dans le pneumatique,
d) puis radialement à l'extérieur, la "nappe calandrée une face" se présentant de sorte que les éléments de renforcement apparents soient radialement à l'intérieur.

29. - Procédé de fabrication d'une "nappe calandrée une face" non vulcanisée et formée d'éléments de renforcement enrobés individuellement dans un mélange caoutchouteux prévulcanisé (B, B₁), **caractérisé en ce que** les éléments de renforcement en provenance de bobines d'enroulage (100) sont dirigés vers une extrudeuse (200) dont la tête comprend plusieurs filières, adaptées pour enrober les dits éléments de la couche (B, B₁) de mélange d'enrobage à une épaisseur prédéterminée, puis dirigés vers un moyen (210) permettant de séparer chaque câble du câble axialement adjacent du pas désiré, pour parvenir à une calandre (300) à deux rouleaux (310) et (320), permettant l'obtention d'une bande plate de mélange de calandrage de support (A, A₁), sur laquelle les éléments enrobés viendront prendre contact à la partie radialement supérieure du rouleau supérieur (310), un moyen auxiliaire (330) dit moyen presseur permettant d'appliquer une pression sur les éléments enrobés, pression régulée en fonction de la profondeur souhaitée d'encastrement des éléments dans la couche de support (A, A₁) et un rouleau (340) déposant une bande intercalaire anti-collante sur l'une des faces de la nappe provenant de la calandre (300), de manière à pouvoir enrouler ladite nappe sur un tambour d'enroulement (350), et ensuite pratiquer les coupes à l'angle désiré, pour former des laizes aboutables et obtenir la "nappe calandrée une face".

## Claims

1. A tyre having at least one reinforcing ply (1, 31, 32) formed of reinforcement elements embedded in vulcanised rubber, said reinforcement elements for said ply being individually coated in a rubber mix (B, B₁), referred to as "coating mix", having a given composition and physical properties, said reinforcement elements arranged parallel to each other being covered on one face by a first rubber layer (A, A₁), referred to as "first calendering layer", of constant composition and properties, whereas said elements are covered on the opposite face by a second rubber calendering layer (C, D), **characterised in that** said second rubber calendering layer has a composition and some properties which are variable according to the meridian position on the ply within the tyre.

2. A tyre according to Claim 1, **characterised in that** the composition and properties of the first layer (A, A₁) are identical to the composition and properties of the coating mix (B, B₁) of the reinforcement elements of the ply.

3. A tyre according to Claim 2, **characterised in that** the reinforcing ply is a carcass reinforcement ply (1).

4. A tyre according to Claim 3, **characterised in that** the carcass reinforcement ply (1), in its main part on its outer face and in its upturned part on its axially inner face, is calendered with the first layer A of constant composition and properties, whereas the opposite faces are covered with the second calendering layer C of composition and properties which are variable according to the meridian length of the ply (1) within the tyre.

5. A tyre according to Claim 4, **characterised in that** the coating mix B has the same composition and properties as those of the mix of the first calendering layer A, the secant modulus of elasticity in tension of said mix in the vulcanised state, measured at a relative elongation of 0.1, being between 6 and 12 MPa, whereas the Mooney viscosity of said mix in the non-vulcanised state is between 60 MU and 90 MU.

6. A tyre according to Claim 4, **characterised in that** the second layer C is formed:
*of a first band C₁ of rubber mix, extending from the point T of the bead wire (2) radially closest to the axis of rotation to the point of intersection S between the centre axis of the meridian profile of the carcass ply (1) and the line perpendicular to said profile lowered by the end of the upturn (10) of the ply (1), the zone TS being referred to as the "bead zone",
*of a second band C₂ of rubber mix, extending from said point T to the point R representing the end of the upturn (10) of the carcass ply (1), the zone TR being referred to as the "upturn zone",
*of a third band C₃ of rubber mix, between the point S and a point of intersection V of the centre axis of the meridian profile of the carcass ply (1) with a straight line parallel to the equatorial plane and distant from said plane by an amount which may be between 30% and 45% of the axial width of the tread (9), the zone SV being referred to as the "sidewall and shoulder zone",
*of a fourth band C₄ of rubber mix, between the point V and the equatorial plane XX', forming what is called the "crown zone", the bands C₁, C₂ and C₄ being formed of the same mix, the elasticity modulus of which is between 6 MPa and 12 MPa and the Mooney viscosity of which is between 60 MU and 90 MU, whereas the band C₃ is formed of a mix, the elasticity modulus of which is between 3,5 MPa and 5 MPa and the Mooney viscosity of which is between 55 MU and 75 MU.

7. A tyre according to Claim 2, **characterised in that** the reinforcing ply is a ply (31, 32) of the crown reinforcement (3), formed of reinforcement elements which are parallel to each other within said ply and form an acute angle with the circumferential direction of the tyre, the meridian position being judged on the axial width of said ply (31, 32).

8. A tyre according to Claim 7, **characterised in that** it comprises a crown reinforcement (3) formed of at least two working crown plies (31, 32), the ply (31) radially closest to the carcass reinforcement being calendered on its radially inner face with a first calendering layer A₁ of constant composition and properties, and on its radially outer face with a second calendering layer D of composition and properties which are variable according to the axial width of said ply (31), whereas the ply (32) radially to the outside of the ply (31) is calendered on its radially outer face with the first calendering layer A₁ of constant composition and properties and on its radially inner face with the second calendering layer D of composition and properties which are variable according to the axial width of said ply (32).

9. A tyre according to Claim 8, **characterised in that** the rubber mix forming firstly the first calendering layer A₁ and secondly the coating mix B₁ of the reinforcement elements of the crown ply (31, 32) has, in the non-vulcanised state, a Mooney viscosity of between 65 MU and 95 MU, and in the vulcanised state a secant modulus of elasticity in tension, measured at 10% relative elongation, of between 15 MPa and 30 MPa.

10. A tyre according to Claim 9, **characterised in that** the second calendering layers D are at least formed of three zones, a central zone D₁, formed of a rubber mix having in the vulcanised state a high modulus of elasticity in tension of between 15 MPa and 30 MPa, and in the non-vulcanised state a Mooney viscosity of between 65 MU and 95 MU, and two lateral zones D₂ formed of a rubber mix having in the vulcanised state a low modulus of elasticity in tension of between 3 MPa and 9 MPa, and in the non-vulcanised state a Mooney viscosity of between 50 and 85 MU.

11. A tyre according to Claim 1, **characterised in that** the composition and properties of the first layer (A, A₁) are different from the composition and properties of the coating mix (B, B₁) of the reinforcement elements of the ply.

12. A tyre according to Claim 11, **characterised in that** the reinforcing ply is a carcass reinforcement ply (1).

13. A tyre according to Claim 12, **characterised in that** the carcass reinforcement ply (1), in its main part on its outer face and in its upturned part on its axially inner face, is calendered with the first layer A of constant composition and properties, whereas the opposite faces are covered with the second calendering layer C of composition and properties which are variable according to the meridian length of the ply (1) within the tyre.

14. A tyre according to Claim 13, **characterised in that** the coating mix B in the vulcanised state has an elasticity modulus of between 27 MPa and 45 MPa and in the non-vulcanised state a Mooney viscosity of between 70 MU and 100 MU, whereas the elasticity modulus in the vulcanised state of the mix of the first calendering layer A is between 10 MPa and 15 MPa and has a Mooney viscosity in the non-vulcanised state of between 60 MU and 90 MU.

15. A tyre according to Claim 4, **characterised in that** the second layer C is formed:
*of a first band C₁ of rubber mix, extending from the point T of the bead wire (2) radially closest to the axis of rotation, to the point of intersection S between the centre axis of the meridian profile of the carcass ply (1) and the line perpendicular to said profile lowered by the end of the upturn (10) of the ply (1), the zone TS being referred to as the "bead zone",
*of a second band C₂ of rubber mix, extending from said point T to the point R representing the end of the upturn (10) of the carcass ply (1), the zone TR being referred to as the "upturn zone",
*of a third band C₃ of rubber mix, between the point S and a point of intersection V of the centre axis of the meridian profile of the carcass ply (1) with a straight line parallel to the equatorial plane and distant from said plane by an amount which may be between 30% and 45% of the axial width of the tread (9), the zone SV being referred to as the "sidewall and shoulder zone",
*of a fourth band C₄ of rubber mix, between the point V and the equatorial plane XX', forming what is called the "crown zone", the bands C₂ and C₃ being formed of the same mix, the elasticity modulus of which is between 3.5 MPa and 5 MPa and the Mooney viscosity of which is between 55 MU and 75 MU, whereas the band C₁ is formed of a mix, the elasticity modulus of which is between 10 MPa and 15 MPa and the Mooney viscosity of which is between 60 MU and 90 MU, and that the band C₄ is formed of a mix, the elasticity modulus of which is between 6 MPa and 12 MPa and the Mooney viscosity of which is between 60 MU and 90 MU.

16. A tyre according to Claim 12, **characterised in that** the carcass reinforcement ply (1), in its main part on its inner face and in its upturned part on its axially outer face, is calendered with the first layer A of constant composition and properties, whereas the opposite faces are covered with the second calendering layer C' of composition and properties which are variable according to the meridian length of the ply (1) within the tyre.

17. A tyre according to Claim 16, **characterised in that** the coating mix B in the vulcanised state has an elasticity modulus of between 27 MPa and 45 MPa and in the non-vulcanised state a Mooney viscosity of between 70 MU and 100 MU, whereas the elasticity modulus in the vulcanised state of the mix of the first calendering layer A is between 3.5 MPa and 5 MPa and a Mooney viscosity in the non-vulcanised state of between 55 MU and 75 MU.

18. A tyre according to Claim 4, **characterised in that** the second layer C is formed:
*of a first band C'₁ of rubber mix, extending from the point U of the upturn (10) of the carcass ply (1), located substantially at mid-height of said upturn (10), to the point of intersection S between the centre axis of the meridian profile of the carcass ply (1) and the line perpendicular to said profile lowered by the end of the upturn (10) of the ply (1),
*of a second band C'₂ of rubber mix, extending from said point U to the point R representing the end of the upturn (10) of the carcass ply (1),
*of a third band C₃ of rubber mix, between the point S and a point of intersection V of the centre axis of the meridian profile of the carcass ply (1) with a straight line parallel to the equatorial plane and distant from said plane by an amount which may be between 30% and 45% of the axial width of the tread (9), the zone SV being referred to as the "sidewall and shoulder zone",
*of a fourth band C₄ of rubber mix, between the point V and the equatorial plane XX', forming what is called the "crown zone", the bands C'₂ and C'₃ being formed of the same mix, the elasticity modulus of which is between 3.5 MPa and 5 MPa and the Mooney viscosity of which is between 55 MU and 75 MU, whereas the band C'₁ is formed of a mix, the elasticity modulus of which is between 10 MPa and 15 MPa and the Mooney viscosity of which is between 60 MU and 90 MU, and that the band C'₄ is formed of a mix, the elasticity modulus of which is between 6 MPa and 12 MPa and the Mooney viscosity of which is between 60 MU and 90 MU.

19. A tyre according to Claim 1, **characterised in that** the reinforcing ply is a crown reinforcement ply formed of circumferential elements.

20. A tyre according to Claim 1, **characterised in that** the reinforcing ply is a bead reinforcement ply.

21. A tyre according to Claim 1, **characterised in that** the reinforcing ply is a sidewall reinforcement ply.

22. A process for manufacturing a tyre according to one of Claims 3 or 12, consisting, firstly, of building on a drum a non-vulcanised cylindrical carcass reinforcement blank comprising at least one carcass ply (1), process according to which the building of the carcass ply (1) requires, after the laying on the cylindrical building drum for the cylindrical carcass reinforcement blank of the different layers of rubber mixes and different bead reinforcement plies, the laying of an intermediate product referred to as "one-face calendered ply", which is non-vulcanised and formed of reinforcement elements coated individually in a rubber mix B, referred to as "coating mix", having a given composition and physical properties, said reinforcement elements arranged parallel to one another being covered on one face with a first rubber layer A, referred to as "first calendering layer" or "supporting layer", of constant composition and properties, said "one-face calendered ply" being brought into contact with a second calendering layer C, **characterised in that** said second calendering layer has a composition and some properties which are variable according to the position on the meridian length of the ply (1) within the tyre.

23. A process according to Claim 22, **characterised in that** the non-vulcanised "one-face calendered ply" is used with reinforcement elements coated individually in a non-vulcanised rubber mix B.

24. A process according to Claim 23, **characterised in that** the non-vulcanised "one-face calendered ply" is used with reinforcement elements coated individually in a rubber mix B which is pre-vulcanised at a given temperature using a suitable heating means.

25. A process according to one of Claims 22 to 24, **characterised in that** the contacting is effected by the laying, on the different layers of rubber mixes and the different bead reinforcement plies covering the cylindrical building drum for the cylindrical carcass reinforcement blank (1), of the "one-face calendered ply" of coated reinforcement elements, and the laying on the visible coated elements of the "one-face calendered ply" of the second calendering layer C of composition and properties which are variable according to the meridian length of the ply (1) within the tyre.

26. A process according to one of Claims 22 to 24, **characterised in that** the contacting is effected by the laying, on the different layers of rubber mixes and the different bead reinforcement plies covering the cylindrical building drum for the cylindrical carcass blank (1), of the second calendering layer C of composition and properties which are variable according to the meridian length of the ply (1) within the tyre and the laying on said second layer of the "one-face calendered ply" of coated reinforcement elements, said elements being laid on the second layer C.

27. A process for manufacturing a tyre according to Claim 7, consisting, at a given instant, of arranging on a non-vulcanised toric carcass reinforcement blank (1) a crown ply (31, 32) of reinforcement elements which are parallel to each other within the ply and form an acute angle with the circumferential direction, **characterised in that** the building of the crown ply (31, 32) requires, after the laying on the toric carcass blank of the different layers (8) of rubber mixes radially separating the carcass reinforcement (1) from the crown reinforcement (3), the laying of an intermediate ply referred to as "one-face calendered ply", which is non-vulcanised and formed of reinforcement elements coated individually in a rubber mix B₁, referred to as coating mix, having a given composition and physical properties, said reinforcement elements arranged parallel to one another being covered on one face with a first rubber layer A₁ or supporting layer, of constant composition and properties, said "one-face calendered ply" being brought into contact with a second calendering layer D of composition and properties which are variable according to the axial width of the crown ply (31, 32) within the tyre.

28. A manufacturing process according to Claim 27 for a tyre having a crown reinforcement (3) formed of two plies (31, 32) according to Claim 8, **characterised in that** there is laid:
a) on a non-vulcanised, toric carcass reinforcement blank (1), a "one-face calendered ply", the supporting layer A₁ of said ply being radially to the inside,
b) then, on the visible reinforcement elements of the "one-face calendered ply", the second rubber calendering layer D of the radially inner crown ply (31), which layer is of composition and properties which are variable according to the axial width of the ply within the tyre, the layers A₁ and D forming the crown ply (31) closest to the carcass reinforcement (1) with the coated elements,
c) then the second rubber calendering layer (D) of the crown ply (32) radially adjacent to the inner ply (31), which layer is of composition and properties which are variable according to the axial width of the ply (32) within the tyre,
d) then, radially to the outside, the "one-face calendered ply", presented such that the visible reinforcement elements are radially to the inside.

29. A process for manufacturing a non-vulcanised "one-face calendered ply" formed of reinforcement elements coated individually in a pre-vulcanised rubber mix (B, B₁), **characterised in that** the reinforcement elements coming from winding reels (100) are sent to an extruder (200) the head of which comprises a plurality of spinnerets, suitable for coating said elements with the layer (B, B₁) of coating mix to a predetermined thickness, then are sent to a means (210) making it possible to separate each cable from the axially adjacent cable by the desired pitch, to arrive at a calender (300) with two rollers (310) and (320), which makes it possible to obtain a flat band of supporting calendering mix (A, A₁), on which the coated elements will make contact with the radially upper part of the upper roller (310), an auxiliary means (330), referred to as "presser means", making it possible to apply a pressure to the coated elements, which pressure is automatically controlled according to the desired depth of embedding of the elements within the supporting layer (A, A₁) and a roller (340) laying an anti-adhesion backing strip on one of the faces of the ply coming from the calender (300), so as to be able to wind said ply on a winding drum (350), and then to make the cuts at the desired angle, to form web widths which can be butt-jointed and to obtain the "one-face calendered ply".

## Patentansprüche

1. Reifen, der mindestens eine Verstärkungsschicht (1, 31, 32) aufweist, die aus Verstärkungselementen zusammensetzt ist, die in vulkanisiertem Kautschuk versenkt sind, wobei die Verstärkungselemente der Schicht einzeln in einer kautschukartigen Mischung (B₁, B₂), einer Umhüllungsmischung, die eine gegebene Zusammensetzung und gegebene physikalische Eigenschaften aufweist, eingehüllt sind, wobei die Verstärkungselemente, die parallel zueinander angeordnet sind, auf einer Vorderseite einer ersten kautschukartigen Lage (A, A₁), der ersten Kalandrierlage, ausgelegt sind, die eine konstante Zusammensetzung und konstante Eigenschaften aufweist, wohingegen die Elemente auf der Vorderseite ausgelegt sind, die einer zweiten kautschukartigen Kalandrierlage (C, D) entgegengesetzt ist, **dadurch gekennzeichnet, dass** die zweite kautschukartige Kalandrierlage eine variable Zusammensetzung und variable Eigenschaften in Abhängigkeit der Meridianposition auf der Verstärkungsschicht im Reifen aufweist.

2. Reifen nach Anspruch 1, **dadurch gekennzeichnet, dass** die Zusammensetzung und die Eigenschaften der ersten Lage (A, A₁) mit der Zusammensetzung und den Eigenschaften der Umhüllungsmischung (B, B₁) der Verstärkungselemente der Schicht identisch sind.

3. Reifen nach Anspruch 2, **dadurch gekennzeichnet, dass** die Verstärkungsschicht eine Karkassenarmierungsschicht (1) ist.

4. Reifen nach Anspruch 3, **dadurch gekennzeichnet, dass** die Karkassenarmierungsschicht (1) in ihrem Hauptteil auf ihrer äußeren Vorderseite und in ihrem umgekehrten Teil auf ihrer axial inneren Vorderseite mit der ersten Lage A mit konstanter Zusammensetzung und konstanten Eigenschaften kalandriert ist, wohingegen die entgegengesetzten Vorderseiten mit der zweiten Kalandrierlage C mit variabler Zusammensetzung und variablen Eigenschaften in Abhängigkeit der Meridianlänge der Schicht (1) im Reifen ausgelegt sind.

5. Reifen nach Anspruch 4, **dadurch gekennzeichnet, dass** die Umhüllungsmischung B dieselbe Zusammensetzung und dieselben Eigenschaften aufweist wie diejenigen der Mischung der ersten Kalandrierlage A, wobei das schneidende Elastizitätsmodul unter Spannung der Mischung im vulkanisierten Zustand, gemessen unter einer relativen Dehnung von 0,1, zwischen 6 und 12 MPa liegt, wohingegen die Mooney-Viskosität der Mischung im nicht vulkanisierten Zustand zwischen 60 MU und 90 MU liegt.

6. Reifen nach Anspruch 4, **dadurch gekennzeichnet, dass** die zweite Lage C gebildet ist aus:
* einem ersten Band C₁ der kautschukartigen Mischung vom Punkt T der Leiste (2) aus, die radial am nächsten zur Drehachse liegt, zum Punkt S des Schnittpunktes zwischen der mittleren Achse des Meridianprofils der Karkassenschicht (1) und der Senkrechten zu dem abgesenkten Profil des Endes der Wende (10) der Schicht (1), wobei die Zone TS die Wulstzone ist,
* einem zweiten Band C₂ der kautschukartigen Mischung vom Punkt T aus zum Punkt R, der das Ende der Wende (10) der Karkassenschicht (1) darstellt, wobei die Zone TR die Wendezone ist,
* einem dritten Band C₃ der kautschukartigen Mischung zwischen dem Punkt S und einem Schnittpunkt V der mittleren Achse des Meridianprofils der Karkassenschicht (1) mit einer Geraden, die zur Äquatorebene parallel ist und von dieser Ebene um eine Menge entfernt ist, die zwischen 30 % und 45 % der axialen Breite der Lauffläche (9) liegt, wobei die Zone SV die Flansch- und Seitenprofilzone ist,
* einem vierten Band C₄ der kautschukartigen Mischung zwischen dem Punkt V und der Äquatorebene XX', die die Kronenzone bildet, wobei die Bande C₁, C₂ und C₄ aus derselben Mischung zusammengesetzt sind, deren Elastizitätsmodul zwischen 6 MPa und 12 MPa liegt und deren Mooney-Viskosität zwischen 60 MU und 90 MU liegt, wohingegen Band C₃ aus einer Mischung zusammengesetzt ist, deren Elastizitätsmodul zwischen 3,5 MPa und 5 MPa liegt und deren Mooney-Viskosität zwischen 55 MU und 75 MU liegt.

7. Reifen nach Anspruch 2, **dadurch gekennzeichnet, dass** die Verstärkungsschicht eine Schicht (31, 32) der Kronenarmierung (3) ist, die aus Verstärkungselementen gebildet ist, die zueinander in der Schicht parallel sind und mit der Umfangsrichtung des Reifens einen spitzen Winkel bilden, wobei sich die Meridianposition nach der Axialbreite der Schicht (31, 32) richtet.

8. Reifen nach Anspruch 7, **dadurch gekennzeichnet, dass** er eine Kronenarmierung (3) umfasst, die aus mindestens zwei Arbeitskronenschichten (31, 32) gebildet ist, wobei die Schicht (31) die radial am nächsten bei der Karkassenarmierung liegende ist, die auf der radial inneren Vorderseite einer ersten Kalandrierlage A₁ kalandriert ist, die eine konstante Zusammensetzung und konstante Eigenschaften aufweist, und auf ihrer radial äußeren Vorderseite aus einer zweiten Kalandrierlage D, die eine variable Zusammensetzung und variable Eigenschaften in Abhängigkeit der axialen Breite der Schicht (31) aufweist, wohingegen die die Schicht (32), die radial außen von der Schicht (31) liegt, auf ihrer Vorderseite, die radial außen von der ersten Kalandrierlage A₁ liegt, kalandriert ist, die eine konstante Zusammensetzung und konstante Eigenschaften aufweist, und auf ihrer radial inneren Vorderseite der zweiten Kalandrierlage D , die eine variable Zusammensetzung und variable Eigenschaften in Abhängigkeit der axialen Breite der Schicht (32) aufweist.

9. Reifen nach Anspruch 8, **dadurch gekennzeichnet, dass** die Kautschukmischung, die einerseits aus der ersten Kalandrierlage A₁ und andererseits aus der Umhüllungsmischung B₁ der Verstärkungselemente der Kronenschicht (31, 32) zusammengesetzt ist, im nicht vulkanisierten Zustand eine Mooney-Viskosität zwischen 65 MU und 95 MU aufweist und im vulkanisierten Zustand ein schneidendes Elastizitätsmodul unter Spannung, gemessen bei 10 % relativer Dehnung, zwischen 15 MPa und 30 MPa aufweist.

10. Reifen nach Anspruch 9, **dadurch gekennzeichnet, dass** die zweiten Kalandrierlagen D aus mindestens drei Zonen gebildet sind, einer zentralen Zone D₁, die aus einer kautschukartigen Mischung zusammengesetzt ist, die im vulkanisierten Zustand ein starkes Elastizitätsmodul unter Spannung zwischen 15 MPa und 30 MPa aufweist und im nicht vulkanisierten Zustand eine Mooney-Viskosität zwischen 65 MU und 95 MU, und zwei laterale Zonen D₂, die aus einer kautschukartigen Mischung zusammengesetzt sind, die im vulkanisierten Zustand ein geringes Elastizitätsmodul unter Spannung zwischen 3 MPa und 9 MPa und im nicht vulkanisierten Zustand eine Mooney-Viskosität zwischen 50 und 85 MU aufweisen.

11. Reifen nach Anspruch 1, **dadurch gekennzeichnet, dass** die Zusammensetzung und die Eigenschaften der ersten Lage (A, A₁) sich von der Zusammensetzung und den Eigenschaften der Umhüllungsmischung (B, B₁) der Verstärkungselemente der Schicht unterscheiden.

12. Reifen nach Anspruch 11, **dadurch gekennzeichnet, dass** die Verstärkungsschicht eine Karkassenarmierungsschicht (1) ist.

13. Reifen nach Anspruch 12, **dadurch gekennzeichnet, dass** die Karkassenarmierungsschicht (1) in ihrem Hauptteil auf ihrer äußeren Vorderseite und in ihrem umgekehrten Teil auf ihrer axial inneren Vorderseite mit der ersten Lage A mit konstanter Zusammensetzung und konstanten Eigenschaften kalandriert ist, wohingegen die entgegengesetzten Vorderseiten mit der zweiten Kalandrierlage C mit variabler Zusammensetzung und variablen Eigenschaften in Abhängigkeit der Meridianlänge der Schicht (1) im Reifen ausgelegt sind.

14. Reifen nach Anspruch 13, **dadurch gekennzeichnet, dass** die Umhüllungsmischung B im vulkanisierten Zustand ein Elastizitätsmodul zwischen 27 MPa und 45 MPa und im nicht vulkanisierten Zustand eine Mooney-Viskosität zwischen 70 MU und 100 MU aufweist, wohingegen das Elastizitätsmodul im vulkanisierten Zustand der Mischung der ersten Kalandrierlage A zwischen 10 MPa und 15 MPa liegt und eine Mooney-Viskosität im nicht vulkanisierten Zustand zwischen 60 MU und 90 MU aufweist.

15. Reifen nach Anspruch 4, **dadurch gekennzeichnet, dass** die zweite Lage C gebildet ist aus:
* einem ersten Band C₁ der kautschukartigen Mischung vom Punkt T der Leiste (2) aus, die radial am nächsten zur Drehachse liegt, zum Punkt S des Schnittpunktes zwischen der mittleren Achse des Meridianprofils der Karkassenschicht (1) und der Senkrechten zu dem abgesenkten Profil des Endes der Wende (10) der Schicht (1), wobei die Zone TS die Wulstzone ist,
* einem zweiten Band C₂ der kautschukartigen Mischung vom Punkt T aus zum Punkt R, der das Ende der Wende (10) der Karkassenschicht (1) darstellt, wobei die Zone TR die Wendezone ist,
* einem dritten Band C₃ der kautschukartigen Mischung zwischen dem Punkt S und einem Schnittpunkt V der mittleren Achse des Meridianprofils der Karkassenschicht (1) mit einer Geraden, die zur Äquatorebene parallel ist und von dieser Ebene um eine Menge entfernt ist, die zwischen 30 % und 45 % der axialen Breite der Lauffläche (9) liegt, wobei die Zone SV die Flansch- und Seitenprofilzone ist,
* einem vierten Band C₄ der kautschukartigen Mischung zwischen dem Punkt V und der Äquatorebene XX', die die Kronenzone bildet, wobei die Bande C₂ und C₃ aus derselben Mischung zusammengesetzt sind, deren Elastizitätsmodul zwischen 3,5 MPa und 5 MPa liegt und deren Mooney-Viskosität zwischen 55 MU und 75 MU liegt, wohingegen Band C₁ aus einer Mischung zusammengesetzt ist, deren Elastizitätsmodul zwischen 10 MPa und 15 MPa liegt und deren Mooney-Viskosität zwischen 60 MU und 90 MU liegt, und wobei Band C₄ aus einer Mischung zusammengesetzt ist, deren Elastizitätsmodul zwischen 6 MPa und 12 MPa liegt und deren Mooney-Viskosität zwischen 60 MU und 90 MU liegt.

16. Reifen nach Anspruch 12, **dadurch gekennzeichnet, dass** die Karkassenarmierungsschicht (1) in ihrem Hauptteil auf ihrer inneren Vorderseite und in ihrem umgekehrten Teil auf ihrer axial äußeren Vorderseite mit der ersten Lage A mit konstanter Zusammensetzung und konstanten Eigenschaften kalandriert ist, wohingegen die entgegengesetzten Vorderseiten mit der zweiten Kalandrierlage C' mit variabler Zusammensetzung und variablen Eigenschaften in Abhängigkeit der Meridianlänge der Schicht (1) im Reifen ausgelegt sind.

17. Reifen nach Anspruch 16, **dadurch gekennzeichnet, dass** die Umhüllungsmischung B im vulkanisierten Zustand ein Elastizitätsmodul zwischen 27 MPa und 45 MPa und im nicht vulkanisierten Zustand eine Mooney-Viskosität zwischen 70 MU und 100 MU aufweist, wohingegen das Elastizitätsmodul im vulkanisierten Zustand der Mischung der ersten Kalandrierlage A zwischen 3,5 MPa und 5 MPa liegt und die Mooney-Viskosität der Mischung A im nicht vulkanisierten Zustand zwischen 55 MU und 75 MU liegt.

18. Reifen nach Anspruch 4, **dadurch gekennzeichnet, dass** die zweite Lage C gebildet ist aus:
* einem ersten Band C'₁ der kautschukartigen Mischung vom Punkt U der Wende (10) der Karkassenschicht (1), die im Wesentlichen in der Hälfte der Wende (10) angeordnet ist, zum Schnittpunkt S zwischen der mittleren Achse des Merdianprofils der Karkassenschicht (1) und der Senkrechten zum gesenkten Profil des Endes der Wende (10) der Schicht (1),
* einem zweiten Band C'₂ der kautschukartigen Mischung vom Punkt U aus zum Punkt R, der das Ende der Wende (10) der Karkassenschicht (1) darstellt,
* einem dritten Band C₃ der kautschukartigen Mischung zwischen dem Punkt S und einem Schnittpunkt V der mittleren Achse des Meridianprofils der Karkassenschicht (1) mit einer Geraden, die zur Äquatorebene parallel ist und von dieser Ebene um eine Menge entfernt ist, die zwischen 30 % und 45 % der axialen Breite der Lauffläche (9) liegt, wobei die Zone SV die Flansch- und Seitenprofilzone ist,
* einem vierten Band C₄ der kautschukartigen Mischung zwischen dem Punkt V und der Äquatorebene XX', die die Kronenzone bildet, wobei die Bande C'₂ und C'₃ aus derselben Mischung zusammengesetzt sind, deren Elastizitätsmodul zwischen 3,5 MPa und 5 MPa liegt und deren Mooney-Viskosität zwischen 55 MU und 75 MU liegt, wohingegen Band C'₁ aus einer Mischung zusammengesetzt ist, deren Elastizitätsmodul zwischen 10 MPa und 15 MPa liegt und deren Mooney-Viskosität zwischen 60 MU und 90 MU liegt, und wobei Band C'₄ aus einer Mischung zusammengesetzt ist, deren Elastizitätsmodul zwischen 6 MPa und 12 MPa liegt und deren Mooney-Viskosität zwischen 60 MU und 90 MU liegt.

19. Reifen nach Anspruch 1, **dadurch gekennzeichnet, dass** die Verstärkungsschicht eine Kronenarmierungsschicht ist, die aus Umfangselementen gebildet ist.

20. Reifen nach Anspruch 1, **dadurch gekennzeichnet, dass** die Verstärkungsschicht eine Wulstverstärkungsschicht ist.

21. Reifen nach Anspruch 1, **dadurch gekennzeichnet, dass** die Verstärkungsschicht eine Flanschverstärkungsschicht ist.

22. Verfahren zur Herstellung eines Reifens nach einem der Ansprüche 3 oder 12, bestehend als Erstes aus dem Ausfertigen auf einer Trommel eines nicht vulkanisierten zylindrischen Karkassenarmierungsrohfabrikats, umfassend mindestens eine Karkassenschicht (1), wobei in dem Verfahren die Ausfertigung der Karkassenschicht (1) nach dem Legen auf die zylindrische Trommel der Ausfertigung des zylindrischen Karkassenarmierungsrohfabrikats der unterschiedlichen Lagen von kautschukartigen Mischungen und unterschiedlichen Wulstverstärkungsschichten, das Legen eines Zwischenproduktes, der sogenannten "kalandrierten Schicht mit einer Vorderseite" erfordert, die nicht vulkanisiert ist und aus Verstärkungselementen gebildet ist, die einzeln in eine kautschukartige Mischung B, die sogenannte Umhüllungsmischung, eingehüllt ist, die eine physikalisch gegebene Zusammensetzung und physikalisch gegebene Eigenschaften aufweist, wobei die Verstärkungselemente, die parallel zueinander angeordnet sind, auf einer Vorderseite mit einer ersten kautschukartigen Lage A, einer sogenannten Kalandrierlage oder Traglage, ausgelegt sind, die eine konstante Zusammensetzung und konstante Eigenschaften aufweist, wobei die "kalandrierte Schicht mit einer Vorderseite" mit einer zweiten Kalandrierlage C in Kontakt gebracht wird, **dadurch gekennzeichnet, dass** die zweite Kalandrierlage eine variable Zusammensetzung und variable Eigenschaften in Abhängigkeit der Position auf der Meridianlänge der Schicht (1) im Reifen aufweist.

23. Verfahren nach Anspruch 22, **dadurch gekennzeichnet, dass** die nicht vulkanisierte "kalandrierte Schicht mit einer Vorderseite" mit Verstärkungselementen benutzt wird, die einzeln in einer nicht vulkanisierten kautschukartigen Mischung B eingehüllt sind.

24. Verfahren nach Anspruch 23, **dadurch gekennzeichnet, dass** die nicht vulkanisierte "kalandrierte Schicht mit einer Vorderseite" mit Verstärkungselementen benutzt wird, die einzeln in einer kautschukartigen Mischung B eingehüllt sind, die bei einer mithilfe eines angepassten Heizmittels gegebenen Temperatur vorvulkanisiert wird.

25. Verfahren nach einem der Ansprüche 22 bis 24, **dadurch gekennzeichnet, dass** das Kontaktieren durch das Legen auf die unterschiedlichen Lagen der kautschukartigen Mischungen und die unterschiedlichen Wulstverstärkungsschichten, die die zylindrische Trommel der Ausfertigung des zylindrischen Karkassenarmierungsrohfabrikats (1) auslegen, der "kalandrierten Schicht mit einer Vorderseite" der umhüllten Verstärkungselemente und das Legen auf die ersichtlichen umhüllten Elemente der "kalandrierten Schicht mit einer Vorderseite" der zweiten Kalandrierlage C mit variabler Zusammensetzung und variablen Eigenschaften in Abhängigkeit der Meridianlänge der Schicht (1) im Reifen erfolgt.

26. Verfahren nach einem der Ansprüche 22 bis 24, **dadurch gekennzeichnet, dass** das Kontaktieren durch das Legen auf die unterschiedlichen Lagen der kautschukartigen Mischungen und die unterschiedlichen Wulstverstärkungsschichten, die die zylindrische Trommel der Ausfertigung des zylindrischen Karkassenrohfabrikats auslegen, der zweiten Kalandrierlage C mit variabler Zusammensetzung und variablen Eigenschaften in Abhängigkeit der Meridianlänge der Schicht (1) im Reifen und das Legen auf die zweite Schicht der "kalandrierten Schicht mit einer Vorderseite" der umhüllten Verstärkungselemente, wobei die Elemente auf die zweiten Lage C gelegt werden.

27. Verfahren zur Herstellung eines Reifens nach Anspruch 7, bestehend zu einem gegebenen Zeitpunkt aus dem Anordnen auf einem nicht vulkanisierten torischen Karkassenarmierungsrohfabrikat (1) einer Kronenschicht (31, 32) der Verstärkungselemente, die in der Schicht zueinander parallel sind und mit der Umfangsrichtung einen spitzen Winkel bilden, **dadurch gekennzeichnet, dass** die Ausfertigung der Kronenschicht (31, 32) nach dem Legen auf das torische Karkassenrohfabrikat der unterschiedlichen Lagen (8) der kautschukartigen Mischungen, die die Karkassenarmierung (1) radial von der Kronenarmierung (3) trennen, das Legen einer Zwischenschicht, einer sogenannten "kalandrierten Schicht mit einer Vorderseite", die nicht vulkanisiert ist und aus Verstärkungselementen gebildet ist, die einzeln in eine kautschukartige Mischung B₁, einer sogenannten Umhüllungsmischung, eingehüllt sind, die eine physikalisch gegebene Zusammensetzung und physikalisch gegebene Eigenschaften aufweist, erfordert, wobei die Verstärkungselemente, die parallel zueinander angeordnet sind, auf einer Vorderseite einer ersten kautschukartigen Lage A₁ oder Traglage, ausgelegt sind, die eine konstante Zusammensetzung und konstante Eigenschaften aufweist, wobei die "kalandrierte Schicht mit einer Vorderseite" mit einer zweiten Kalandrierlage D in Kontakt gebracht wird, die eine variable Zusammensetzung und variable Eigenschaften in Abhängigkeit der axialen Breite der Kronenschicht (31, 32) im Reifen aufweist.

28. Verfahren zur Herstellung nach Anspruch 27 eines Reifens mit einer Kronenarmierung (3), die aus zwei Schichten (31, 32) nach Anspruch 8 gebildet ist, **gekennzeichnet durch** das Legen:
a) auf ein nicht vulkanisiertes und torisches Karkassenarmierungsrohfabrikat (1) einer "kalandrierten Schicht mit einer Vorderseite", wobei die Traglage A₁ der Schicht radial innen liegt,
b) danach auf die ersichtlichen Verstärkungselemente der "kalandrierten Schicht mit einer Vorderseite" der zweiten kautschukartigen Kalandrierlage D der Kronenschicht (31), die radial innen liegt, der Lage mit variabler Zusammensetzung und variablen Eigenschaften in Abhängigkeit der axialen Breite der Schicht im Reifen, der Lagen A₁ und D, welche mit den umhüllten Elementen die Kronenschicht (31) bilden, die am nächsten bei der Karkassenarmierung (1) liegt,
c) danach die zweite kautschukartige Kalandrierlage (D) der Kronenschicht (32), die radial an die innere Schicht (31) angrenzt, der Lage mit variabler Zusammensetzung und variablen Eigenschaften in Abhängigkeit der axialen Länge der Schicht (32) im Reifen,
d) dann radial außen der "kalandrierten Schicht mit einer Vorderseite", die derart dargestellt ist, das die ersichtlichen Verstärkungselemente radial innen liegen.

29. Verfahren zur Herstellung einer nicht vulkanisierten "kalandrierten Schicht mit einer Vorderseite", die aus Verstärkungselementen gebildet ist, die einzeln in eine vorvulkanisierte kautschukartige Mischung (B, B₁) eingehüllt ist, **dadurch gekennzeichnet, dass** die Verstärkungselemente, die aus Aufrollspulen (100) stammen, zu einer Strangpresse (200) geführt werden, deren Kopf mehrere Spritzmatrizen aufweist, die angepasst sind, um die Elemente der Lage (B, B₁) der Umhüllungsmischung bei einer vorherbestimmten Dicke einzuhüllen, dann zu einem Mittel (210) geführt, das ermöglicht, dass jedes Kabel vom axial angrenzenden Kabel des gewünschten Schritts getrennt wird, um zu einem Kalander (300) mit zwei Walzen (310) und (320) zu gelangen, der das Erhalten eines flachen Bands der Tragkalandriermischung (A, A₁) ermöglicht, auf dem die eingehüllten Elemente mit dem radial höheren Teil der höheren Walze (310) Kontakt aufnehmen, wobei ein Hilfsmittel (330), ein sogenanntes Pressmittel, das Aufbringen eines Drucks auf die eingehüllten Elemente ermöglicht, wobei der Druck in Abhängigkeit der gewünschten Tiefe der Einfügung der Elemente in die Tragfläche (A, A₁) reguliert wird, und wobei eine Walze (340) ein Antihaftzwischenband auf eine der Vorderseiten der Schicht, die aus dem Kalander (300) stammt, auflegt, sodass die Schicht auf eine Aufrolltrommel (350) aufgerollt werden kann, und anschließend das Ausführen der Schnitte unter dem gewünschten Winkel, um die aneinandergefügten Breiten zu bilden und die "kalandrierte Schicht mit einer Vorderseite" zu erhalten.
